# EUROPÄISCHE PATENTSCHRIFT

(11) **EP 2 917 044 B1**
(45) Veröffentlichungstag und Bekanntmachung des Hinweises auf die Patenterteilung: **21.11.2018**
(21) Anmeldenummer: 13777012.9
(22) Anmeldetag: 10.10.2013
(51) Int. Cl.: B60B 1/06, B60B 3/08, B60B 3/10, B60B 5/02, B60B 7/06

(54) **ZWEITEILIGER RADSTERN MIT PROFILSPEICHEN**
TWO-PART WHEEL SPIDER HAVING PROFILE SPOKES
ÉTOILE DE ROUE EN DEUX PARTIES POURVUE DE RAYONS PROFILÉS

(30) Priorität: 06.11.2012 DE 102012022148
(43) Veröffentlichungstag der Anmeldung: 16.09.2015
(73) Patentinhaber: ThyssenKrupp Carbon Components GmbH, 01723 Kesselsdorf (DE)
(72) Erfinder: DREßLER, Michael, 01307 Dresden (DE); WERNER, Jens, 01640 Coswig (DE); KÖHLER, Christian, 01099 Dresden (DE); BARTSCH, André, 02747 Großhennersdorf (DE); MÄKE, Sandro, 01796 Dohma (DE)
(74) Vertreter: Kailuweit & Uhlemann Patentanwälte Partnerschaft mbB
(86) Internationale Anmeldenummer: PCT/EP2013/071204
(87) Internationale Veröffentlichungsnummer: WO 2014/072151

(56) Entgegenhaltungen:
- WO-A1-98/23455
- DE-U1- 29 623 451
- FR-A1- 2 516 866

## Beschreibung

Gegenstand der vorliegenden Erfindung ist ein Radstern mit Profilspeichen, der sich aus mindestens zwei Einzelteilen zusammensetzt, die formschlüssig ineinandergreifen, entsprechend dem Oberbegriff des Anspruchs 1 und wie es aus Dokument DE 296 23 451 bekannt ist.

Es ist eine Reihe von Konstruktionen bekannt, die Radsterne aus Faserverbundwerkstoffen vorsehen. Diese werden häufig bei der Herstellung anfänglich als Scheibenradstern ausgeführt und nach der Konsolidierung, bspw. mittels CNC-Ausfräsen, mit Aussparungen versehen. Dabei werden naturgemäß die durchgehenden Faserverläufe unterbrochen. Dies wirkt sich nachteilig auf die Festigkeit des Endproduktes aus.

Die Bauform eines Rades aus Faserverbundwerkstoffen nach DE 10 2010 010 512 A1, sieht eine Anbindung des scheibenförmigen Radsterns an das Felgenbett über einen Hinterschnitt vor, der durch Umflechten einer umlaufenden Kontur des Radsterns erfolgt. Die Notwendigkeit einer umlaufenden Kontur führt nachteilig zu Beschränkungen in der Designfreiheit der Radsterne.

Eine weitere bekannte Konstruktion (DE 10 2006 051 867 A1) sieht einen Radstern aus Faserverbundwerkstoff vor, der sich aus ringförmigen aneinander liegenden Speichensegmenten zusammensetzt, die aus umlaufenden unidirektionalen Fasersträngen bestehen, die mittels Wickeltechnologie hergestellt wurden. Dieses Herstellungsverfahren ist sehr aufwendig und erfordert eine Vielzahl unterschiedlicher Arbeitsgänge, die nur schwer zu automatisieren sind. Darüber hinaus weist ein Rad dieser Konstruktion eine nur geringe Crash-Stabilität auf.

Aus der DE 296 23 451 U1 ist ein Radstern bekannt, welcher zumindest aus zwei miteinander verbundenen Formteilen gebildet wird, wobei die beiden Formteile die Speichen in ihrer radialen Erstreckung vollständig verschließen.

Es stellt sich somit die Aufgabe, eine Radkonstruktion vorzuschlagen, die eine große Designfreiheit bei der Gestaltung des Radsterns bietet, daneben aber die hohen Anforderungen des modernen Automobilbaus an die Crash-Stabilität erfüllt.

Erfindungsgemäß wird die Aufgabe mit dem Rad nach Anspruch 1 gelöst. Vorteilhafte Ausführungsformen sind in den rückbezogenen Unteransprüchen offenbart.

Das erfindungsgemäße Rad weist einen Radstern und eine Felge auf, wobei die Felge ihrerseits wieder aus Felgenbett und Felgenhörnern besteht. Bevorzugt besteht das Rad vollständig oder teilweise aus Faserverbundwerkstoff oder Metall. Bevorzugt besteht die Felge vollständig aus Faserverbundwerkstoff oder Metall. Der Radstern besteht aus zwei Formteilen, wobei das erste Formteil die Speichen mit einem offenen Profilquerschnitt ausbildet. Das Rad bzw. das erste Formteil weist dabei zwei, drei oder mehr Speichen auf. Die Speichen weisen eine Profilachse auf, die entlang ihrer Längserstreckung, üblicherweise von der Radnabe zur Felge, verläuft. Das zweite Formteil verschließt den offenen Profilquerschnitt entlang der Profilachsen des ersten Formteils vollständig oder auch nur teilweise. Das erste Formteil besteht bevorzugt aus Faserverbundwerkstoff, während das zweite Formteil aus Faserverbundwerkstoff oder Metall bestehen kann. In einer weiteren bevorzugten Ausführungsform besteht auch das erste Formteil aus Metall, wobei die weiter unten geschilderten Methoden zur Verarbeitung von Faserverbundwerkstoffen durch die entsprechenden, dem Fachmann bekannten Methoden zur Metallverarbeitung (Tiefziehen, Rollen etc.) ersetzt werden. Bevorzugt ist auch die Radnabe in den Radstern integriert und wird von einem der beiden Formteile ausgebildet, ganz besonders bevorzugt bildet das zweite Formteil die Radnabe aus. Weiterhin bevorzugt wird die Radnabe von beiden Formteilen gemeinsam ausgebildet. Bevorzugt sind die Profilquerschnitte des ersten und des zweiten Formteils im Bereich der Speichen U-förmig, wobei die Öffnungen der beiden Formteile einander zu- oder abgewandt sind und der Profilquerschnitt des einen Formteils den des anderen klammerartig umfasst. Besonders bevorzugt umfasst der Profilquerschnitt des ersten Formteils den des zweiten. In weiteren bevorzugten Ausführungsformen greifen die Profilquerschnitte konisch oder eine Klickverbindung ausbildend ineinander oder liegen, eine Stoßverbindung ausbildend, aufeinander.

Es sind Ausführungsformen bevorzugt, bei denen die Profilachsen an den radial außen liegenden Enden der zweiten Formteile verschlossen sind, so dass sich mindestens ein vollständig abgeschlossener Hohlraum zwischen erstem und zweitem Formteil ausbildet. So wird vorteilhaft eine Verschmutzung des Zwischenraumes zwischen erstem und zweitem Formteil vermieden. Weiterhin bevorzugt sind auch offene Enden der zweiten Formteile, was wiederum vorteilhaft die Kühlung des Radsterns verbessert.

Die beiden Teile des Radsterns sind dadurch bevorzugt formschlüssig derart miteinander verbunden, dass jeweils die axial gerichteten Bereiche der Profilspeichen sowie des Radnabenflansches ineinandergreifen und somit mindestens eine, typischerweise zwei oder mehr, Berührungsflächen entstehen. Bevorzugt werden die beiden Formteile an diesen Berührungsflächen miteinander verbunden. Diese Verbindung erfolgt vorzugsweise formschlüssig (mittels Rastverbindung der beiden Formteile ineinander) oder stoffschlüssig (mittels Klebeverbindung oder Schweißverbindung). Auch eine Kombination von stoff- und formschlüssiger Verbindung ist möglich.

Die Anbindung des Radsterns an das Felgenbett erfolgt bevorzugt über eine hinterschnittige Verbindung der Speichensegmente. Bevorzugt werden dabei die Enden der einzelnen Speichen durch Umflechten (Preforming des Felgenbettes mittels des Umflechtverfahrens) formschlüssig mit dem Felgenbett verbunden. Dazu werden die vollständig oder teilweise konsolidierten oder auch unkonsolidierten Enden der Speichensegmente bei der Herstellung des Felgenbettes überflochten. Mit dem Tränken mit Matrixmaterial und dem anschließenden Konsolidieren des Felgenbettes entsteht eine formschlüssige und bei gleichem Matrixmaterial (bzw. chemisch verbindenden Matrixmaterialien) auch eine stoffschlüssige Verbindung mit dem Matrixmaterial des Formteils.

Die Anbindungsflächen der Speichen an das Felgenbett sind bei einer weiteren bevorzugten Ausführungsform über tangential ein- oder auslaufende Laschen vergrößert. Diese werden bevorzugt ausgebildet, indem die Enden der Speichen parallel zu dem inneren Umfang der Felge umgelegt sind und so abschnittsweise an der Innenseite der Felge verlaufen.

In einer bevorzugten Ausführungsform weist das erste Formteil die Nabe auf. Diese umgibt ggf. die Achsöffnung und weist die Öffnungen für die Schrauben auf. Das zweite Formteil verschließt den offenen Profilquerschnitt des ersten Formteils vollständig oder teilweise und weist in einer bevorzugten Ausführungsform ebenfalls Schraubenöffnungen auf. Bevorzugt befindet sich zwischen dem erstem und dem zweitem Formteil, sowie die Schraubenlöcher umgebend, mindestens ein Abstandselement aus Metall oder Faserverbundwerkstoff zur Lastaufnahme (Lastaufnahmeelement), das die Anpresskraft der Schrauben aufnimmt. Bevorzugt wird das Abstandselement durch ein flächiges Lastaufnahmeelement (bevorzugt aus Metall) im ersten Formteil positioniert. In einer ganz besonders bevorzugten Ausführungsform besteht das zweite Formteil selbst aus Metall und fungiert als Lastaufnahmeelement, indem es die Anpresskraft der Schrauben aufnimmt. Das zweite Formteil ist dann mindestens um die Schraubenlöcher herum nicht hohl sondern weist durchgehendes Material auf, so dass der Anpressdruck der Schrauben auf beiden Seiten aufgenommen und durch das Formteil abgestützt wird.

Vorteilhaft können die Speichen beliebige Querschnitte aufweisen, die eine belastungsgerechte Gestaltung des Felgensterns ermöglichen, besonders bevorzugt sind dabei entsprechend ausgeformte U-Profile.

Das Rad besteht bevorzugt aus faserverstärktem Kunststoff. Als Materialkombinationen kommen vorzugsweise kohlefaserverstärkte Verbundwerkstoffe, bsw. mit Epoxidharz als Matrixmaterial, zum Einsatz. Für Ausführungsformen, die teilweise oder vollständig aus Metall gefertigt werden, sind Stahl, Aluminium, Titan oder Magnesium bzw. die für die Radfertigung aus dem Stand der Technik bekannten Legierungen besonders bevorzugt.

Die erfindungsgemäße Konstruktion ermöglicht vorteilhaft eine weitere Massereduzierung durch die aufgelöste Speichengeometrie. Weiterhin vorteilhaft besteht keine Notwendigkeit von CNC-Nachbearbeitungen, was die verstärkende Faserstruktur unbeschädigt erhält. So kann eine besonders hohe Crashstabilität des Radsterns erreicht werden.

### Ausführungsbeispiele

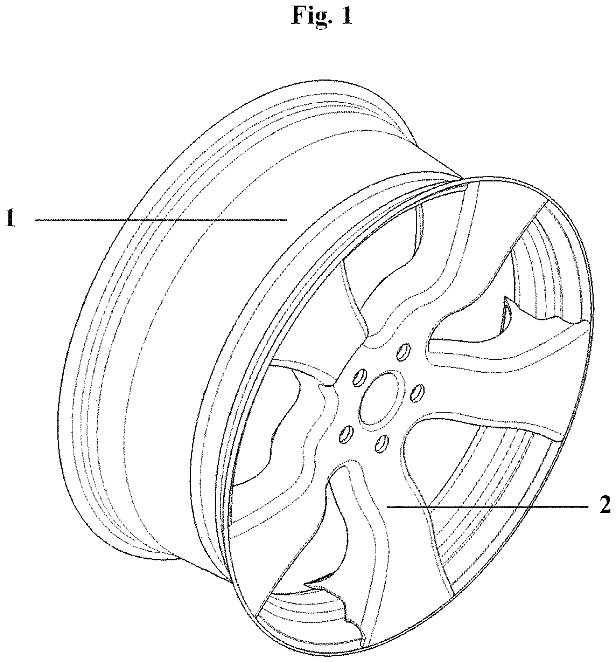

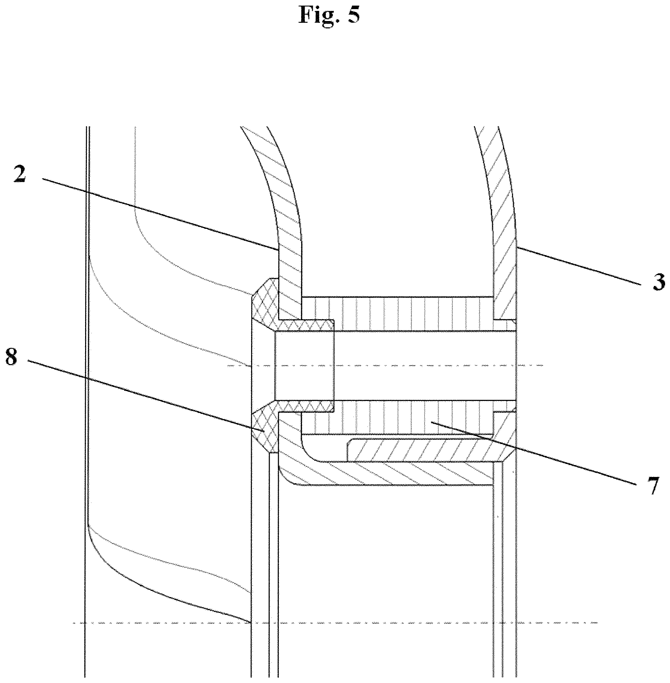

### Ausführungsbeispiel 1 nach Fig. 1, Fig. 2 (a-c), Fig.3, Fig. 4 (a-c), Fig.5:

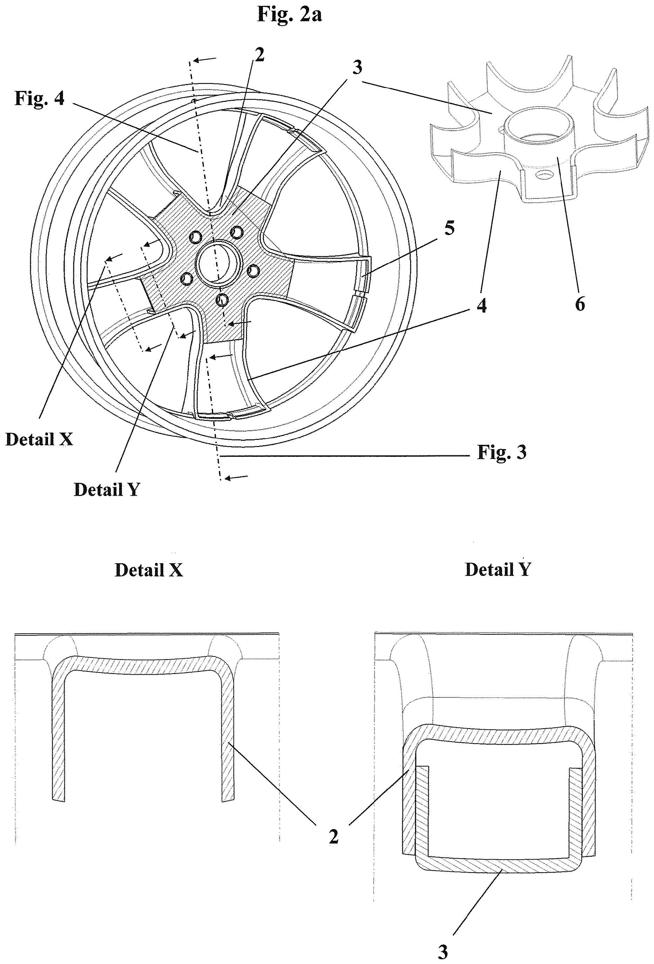

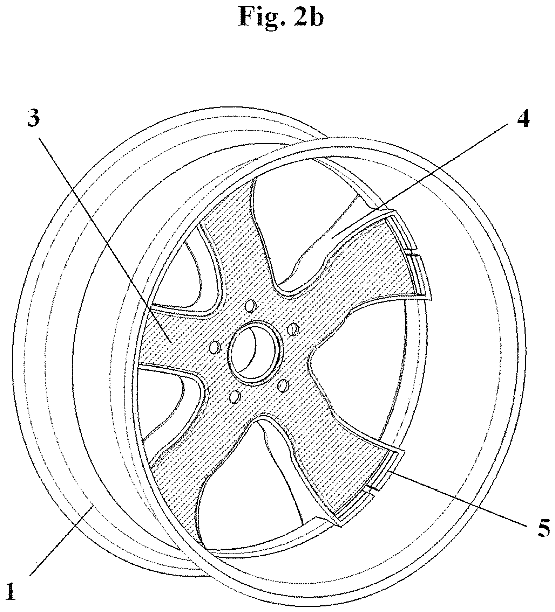

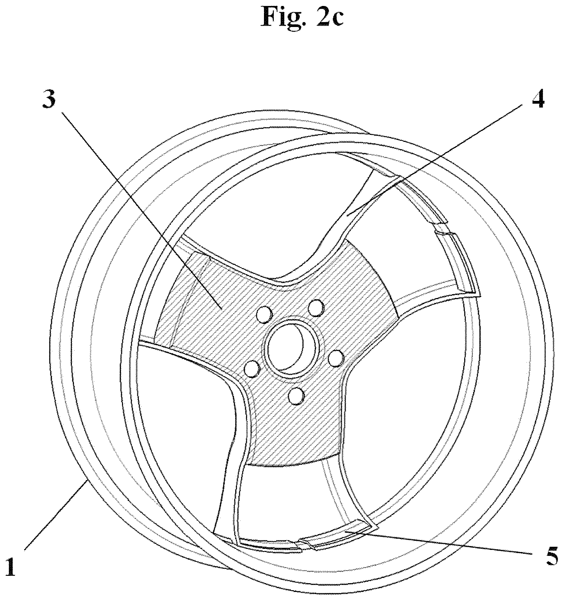

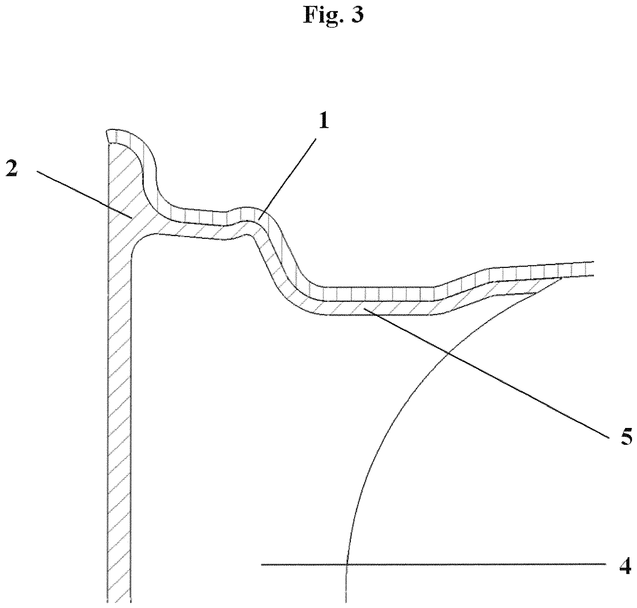

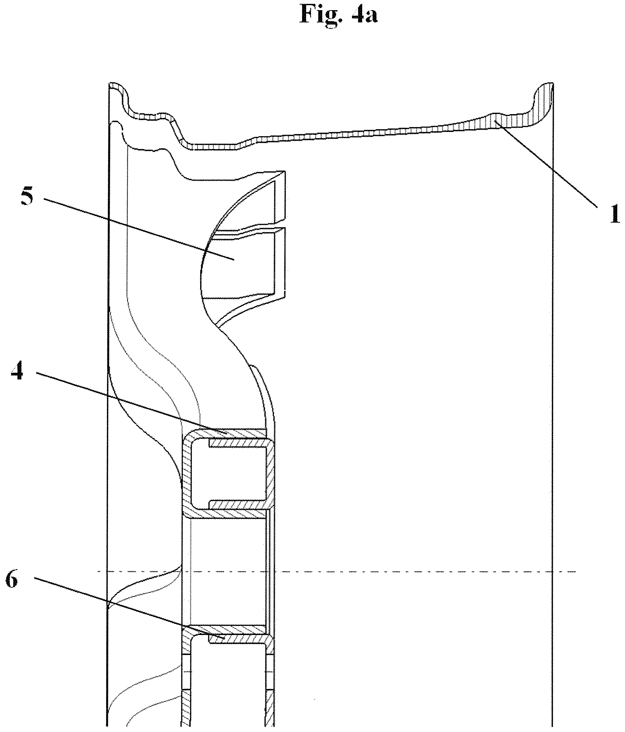

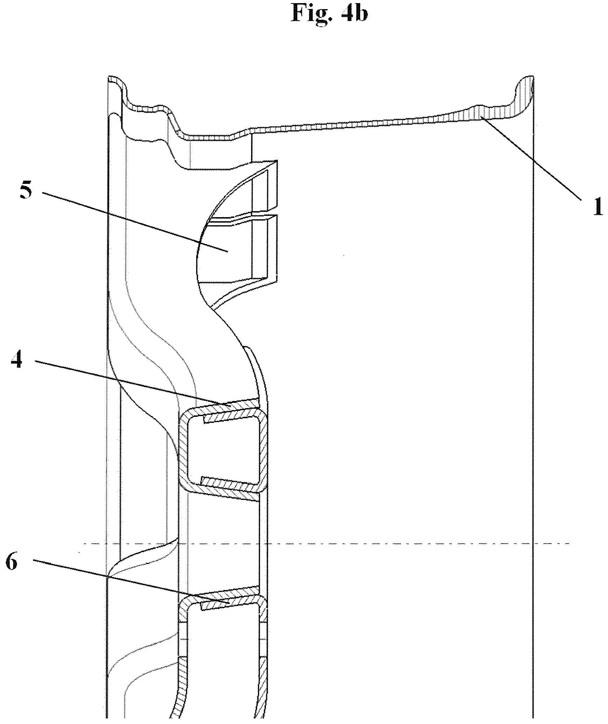

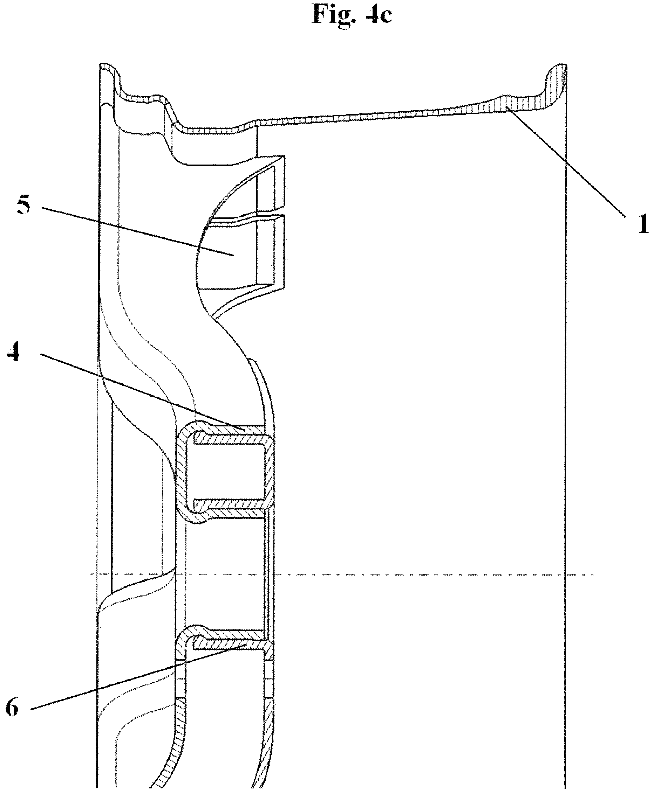

Beim ersten Ausführungsbeispiel setzt sich der Radstern aus zwei separaten Formteilen (2, 3) zusammen, welche die Speichensegmente sowie die Radnabe bilden. Die Speichensegmente des ersten Formteils (2) sind fahrzeugseitig durch einen offenen Querschnitt gekennzeichnet. Das Detail X zeigt den Querschnitt einer Speiche, die in dem Bereich, in dem das Formteil 2 die Öffnung im U-förmigen Querschnitt des ersten Formteils (2) nicht verschließt. Im Detail Y ist zu erkennen, wie diese Öffnung in einem anderen Bereich durch das formschlüssig in sie eingreifende, ebenfalls mit U-förmigem Querschnitt ausgebildete zweite Formteil (3) abgedeckt wird. Die Speichen werden axial und radial über einen Formschluss (Fig. 3) in die textile Struktur des Felgenbettes (1) integriert. Den Hinterschnitt bilden die seitlichen, axial gerichteten Bereiche (4) des Speichenquerschnittes, die unterhalb der Tiefbettanbindung an das Felgenbett zur Speichenmittelachse umgeklappt werden und damit eine flächige Anbindung (5) gewährleisten. Die Anschlussfläche bzw. die Radnabe des Radsterns wird durch ein zweites Formteil (3) realisiert, wodurch der Querschnitt der Speichen vollständig geschlossen wird (Fig. 2a, Detail Y). Das zweite Formteil kann dabei derart ausgeführt sein, dass der offene Speichenquerschnitt in radialer Richtung teilweise (Fig. 2a) oder vollständig bis unterhalb des Felgentiefbettes (Fig. 2b, wobei die Ausführung entsprechend der Figur 2b nicht zum Inhalt der Erfindung zählt) geschlossen ist. Weiterhin können die Speichenenden des zweiten Formteiles derart ausgeführt sein, dass ein abgeschlossener, gegen Medien geschützter Hohlraum zwischen den beiden Formteilen erzeugt wird (Fig. 2c). Die Anzahl der Speichensegmente ist beliebig. Die beiden Formteile (2, 3) werden formschlüssig über die axial gerichteten Bereiche der Speichenprofile und Mittenzentrierung (6) miteinander verbunden, wodurch eine mögliche Klebefläche gegeben ist. Zur Zentrierung der beiden Formteile können die Verbindungsflächen der beiden Formteile dabei axial (Fig. 4a), konisch (Fig. 4b) und/oder über eine Schnappverbindung (Fig. 4c) zueinander ausgerichtet sein. Zusätzlich erfolgt die Ausrichtung der beiden Formteile zueinander über Abstandssegmente (7), die durch ein flächig angebundenes Lasteinleitungselement (8), welches zusätzlich der Aufnahme der Radverschraubungselemente dient, aufgenommen werden und damit das zweite Formteil (3) exakt positionieren.

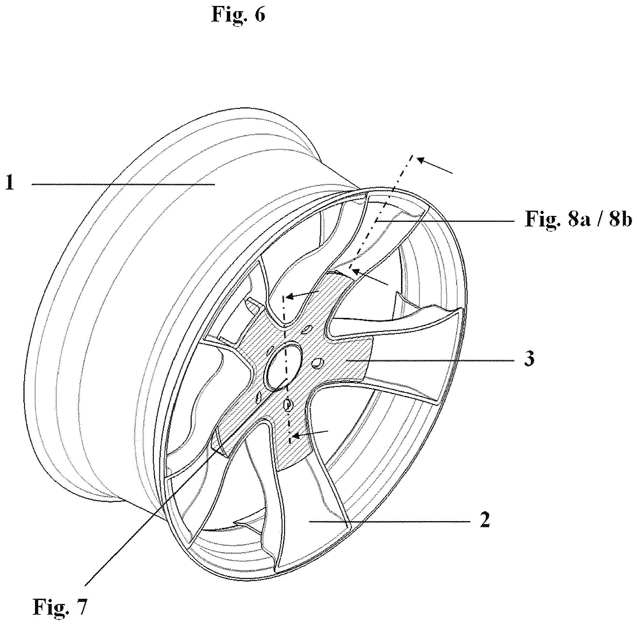

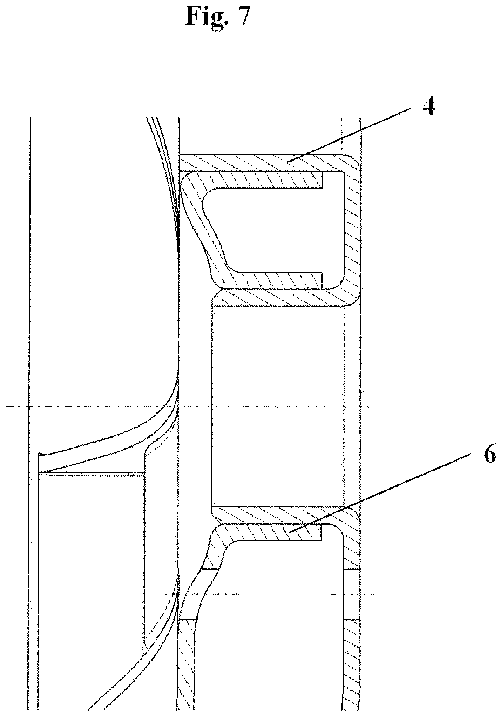

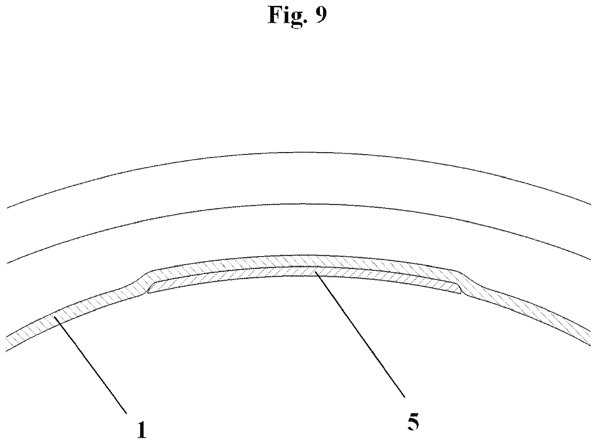

### Ausführungsbeispiel 2 nach Fig. 6, Fig. 7, Fig. 8 (a-b), Fig. 9:

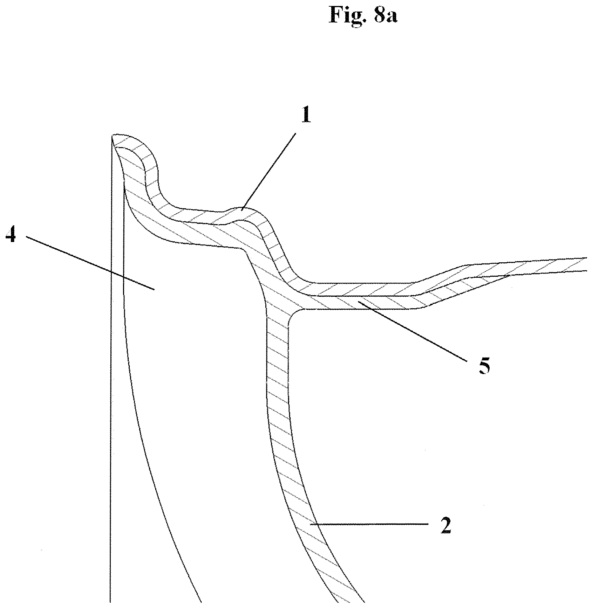

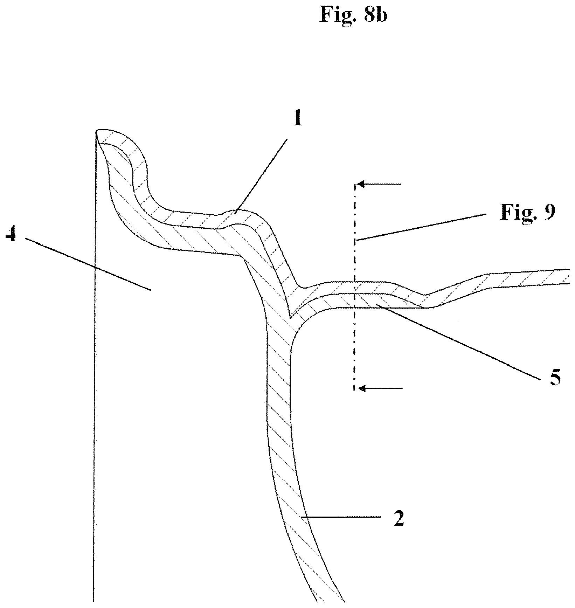

Bei diesem Ausführungsbeispiel besteht der Radstern ebenfalls aus zwei Faserverbundwerkstoff-Formteilen. Dabei befindet sich der offene Querschnitt der Speichen auf der fahrzeugabgewandten Seite, so dass die Anbindung der Speichensegmente an das Felgenbett großflächig erfolgen kann. Weiterhin sind die Speichen durch einen hinterschnittigen Formschluss mit dem Tiefbett des Felgenbettes verbunden, wobei die hinterschnittbildenden Laschen der Speichensegmente (5) an oder in die textile Umflechtstruktur des Felgenbettes integriert werden können (Fig. 8a, 8b). Gleichzeitig übernimmt dieses Formteil (2) die Funktion der Radnabenanschlussfläche des Rades. Das zweite Formteil (3) wird über entsprechende Abstandssegmente positioniert und schließt damit den offenen Querschnitt der Speichensegmente vollständig.

Die beiden Formteile (2, 3) werden formschlüssig über die Umrandungen der Speichenprofile und Mittenzentrierung (6) miteinander verbunden, wodurch eine mögliche Klebefläche gegeben ist.

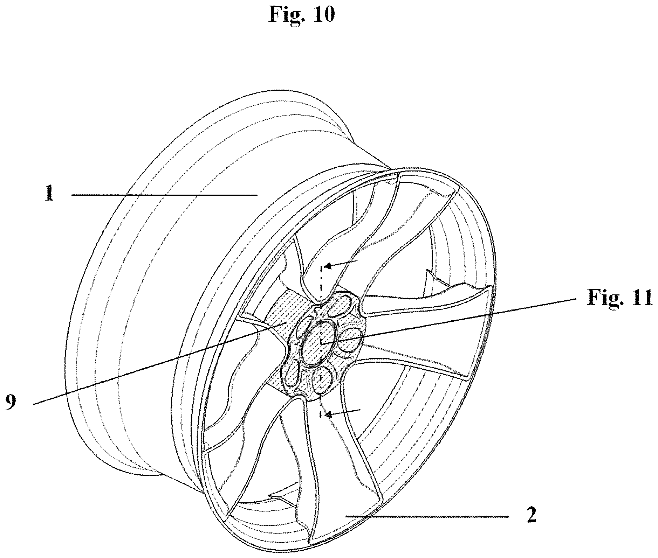

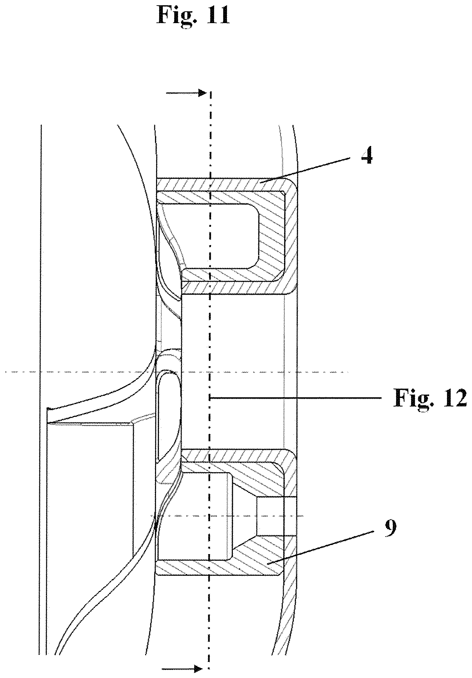

### Ausführungsbeispiel 3 nach Fig. 10, Fig. 11, Fig. 12:

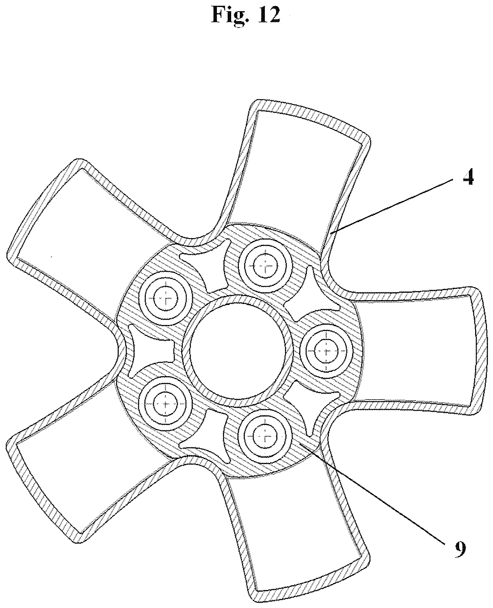

Dieses Ausführungsbeispiel unterscheidet sich gegenüber den Vorigen dahingehend, dass sich der Radstern aus einem metallischen Lasteinleitungselement (9) und einem Formteil aus Faserverbundwerkstoff (2) zusammensetzt. Das Formteil mit den Speichensegmenten und der Radnabenanschlussfläche ist wie im Ausführungsbeispiel 2 beschrieben mit dem Felgenbett verbunden. Das metallische Lasteinleitungselement (9) ist durch eine umlaufende Wellenkontur gekennzeichnet, wodurch das zur Aufnahme der Radverschraubungselemente dienende Element verdrehsicher zwischen den axial gerichteten Bereichen der Speichensegmente und Mittenzentrierung des Formteiles integriert ist (Fig. 12). Die Kontaktflächen können dabei für eine zusätzliche Klebeverbindung genutzt werden.

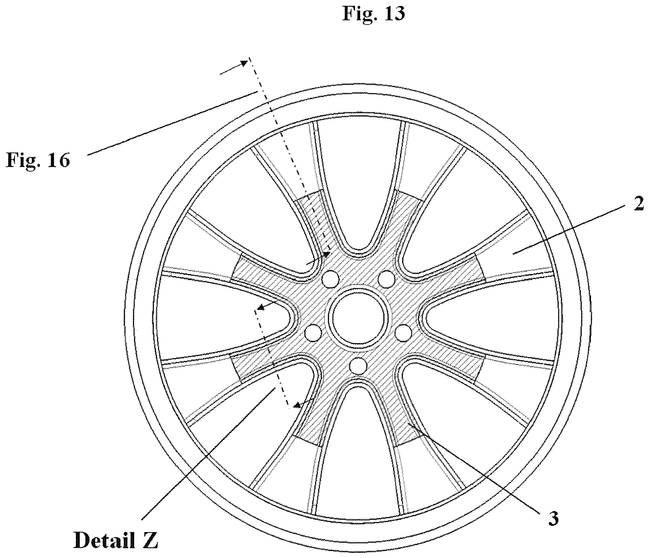

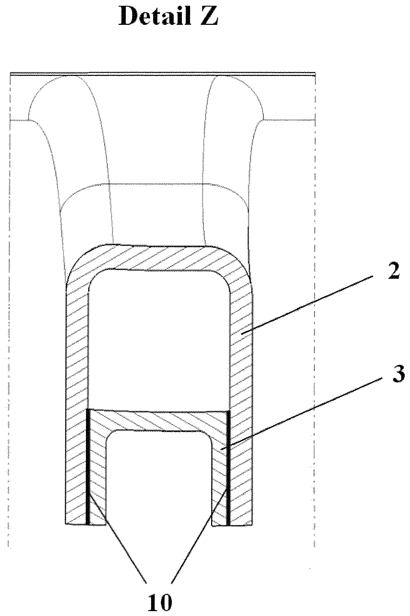

### Ausführungsbeispiel 4 nach Fig. 13, Fig. 14, Fig. 15, Fig. 16:

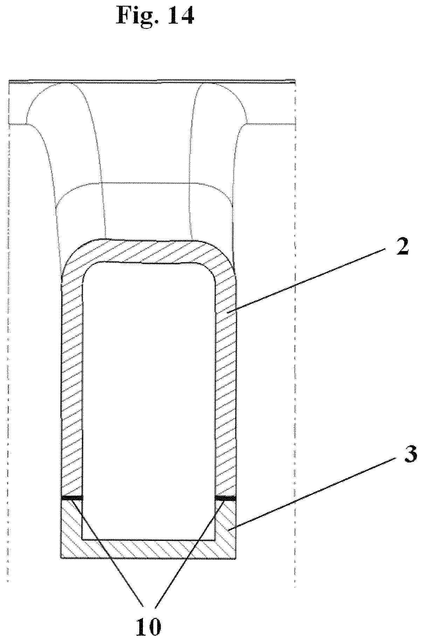

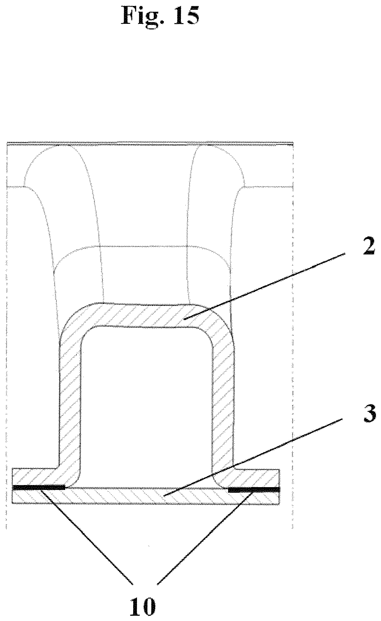

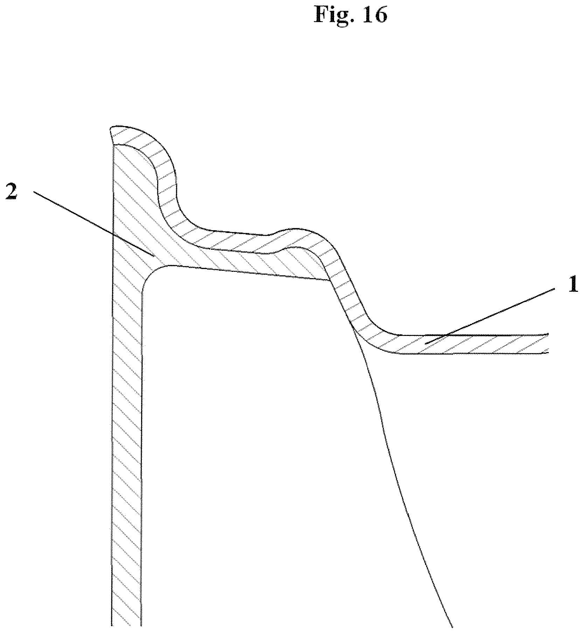

Dieses Ausführungsbeispiel unterscheidet sich von Ausführungsbeispiel 1 dahingehend, dass beide Formteile mit einem fahrzeugseitig offenen Profilquerschnitt, bevorzugt U-Profile, miteinander gefügt werden (Fig.13). Die dabei entstehende Fügezone (10) kann als Klebefläche genutzt werden. Weiterhin kann die Fügezone (10) derart ausgeführt werden, dass die Verbindung beider Formteile über eine Stoß- (Fig.14) oder Überlappungsverbindung (Fig.15) realisiert wird. Die hinterschnittige, formschlüssige Verbindung zwischen dem ersten Formteil und dem Felgenbett kann hierbei über die Sicherungsschulter des Felgenbettes (Hump) erfolgen (Fig. 16).

### Bezugszeichenliste

- 1: Felgenbett
- 2: Erstes Formteil mit Speichensegmenten
- 3: Zweites Formteil mit Radnabenanschlussfläche
- 4: Axial gerichtete Bereiche der Speichensegmente
- 5: Anbindungslaschen der Speichen an das Felgenbett
- 6: Axial gerichtete Bereiche der Mittenzentrierung
- 7: Abstandssegmente aus Faserverbundwerkstoff oder Metall
- 8: Flächiges Lasteinleitungselement
- 9: Metallisches Lasteinleitungselement
- 10: Fügezone

## Patentansprüche

1. Rad, bestehend aus einer Felge mit Felgenbett (1) und einem zweiteiligen Radstern, wobei der Radstern aus zwei Formteilen besteht, wobei ein erstes Formteil (2) die Speichen mit einem offenen Querschnitt ausbildet und das zweite Formteil (3) mit dem ersten Formteil (2) gefügt wird, **dadurch gekennzeichnet, dass** das zweite Formteil (3) die Speichen des ersten Formteiles (2) in radialer Richtung teilweise entlang der Profillänge verschließt.

2. Rad nach Anspruch 1, **dadurch gekennzeichnet, dass** die Speichen des ersten Formteils (2) eine hinterschnittige, formschlüssige Verbindung mit dem Felgenbett (1) bilden.

3. Rad nach Anspruch 1 oder 2, **dadurch gekennzeichnet, dass** die beiden Formteile (2, 3) des Radsterns über die axial gerichteten Bereiche (4) des Speichenprofils und die Mittenzentrierung formschlüssig miteinander verbunden sind.

4. Rad nach einem der vorhergehenden Ansprüche, **dadurch gekennzeichnet, dass** die beiden Formteile (2, 3) des Radsterns an einander berührenden Flächen oder entlang mindestens einer gemeinsamen Verbindungslinie stoffschlüssig verbunden sind.

5. Rad nach einem der vorhergehenden Ansprüche, **dadurch gekennzeichnet, dass** der offene Querschnitt der Speichen in Richtung Fahrzeugmittelachse oder zur fahrzeugabgewandten Seite zeigt.

6. Rad nach einem der vorhergehenden Ansprüche, **dadurch gekennzeichnet, dass** die seitlichen, axial gerichteten Kontaktflächen der Speichensegmente und/oder die Mittenzentrierung als Klebeflächen ausgeführt sind.

7. Rad nach einem der vorhergehenden Ansprüche, **dadurch gekennzeichnet, dass** die Ausrichtung des zweiten Formteiles (3) über Abstandssegmente (7) erfolgt, die durch ein flächiges Lasteinleitungselement (8), welches vom ersten Formteil (2) aufgenommen wird, positioniert werden.

8. Rad nach einem der vorhergehenden Ansprüche, **dadurch gekennzeichnet, dass** sich der Radstern aus einem ersten Formteil (2) aus Faserverbundwerkstoff und einem metallischem zweiten Formteil (3), dass als Lasteinleitungselement fungiert zusammensetzt, wobei das zweite Formteil (3) mit dem ersten Formteil (2) über die axial gerichteten Bereiche (4) der Speichensegmente und der Mittenzentrierung (6) verdrehsicher verbunden ist.

9. Rad nach Anspruch 8, **dadurch gekennzeichnet, dass** das metallische Lasteinleitungselement (9) die Radnabe ausbildet.

## Claims

1. Wheel, comprising a rim with a rim well (1) and with a two-part wheel spider, wherein the wheel spider comprises two molded parts, wherein the first molded part (2) forms the spokes with an open cross section and the second molded part (3) is joined to the first molded part (2), **characterized in that** the second molded part (3) partially closes the spokes of the first molded part (2) in the radial direction along the length of the profile.

2. Wheel in accordance with claim 1, **characterized in that** the spokes of the first molded part (2) form an undercut, positive-locking connection with the rim well (1).

3. Wheel in accordance with claim 1 or 2, **characterized in that** the two molded parts (2, 3) of the wheel spider are connected with one another in a positive-locking manner via the axially directed areas (4) of the spoke profile and the hub centering.

4. Wheel in accordance with one of the above claims, **characterized in that** the two molded parts (2, 3) of the wheel spider are connected with one another in substance on surfaces that are in contact with one another or along at least one common connection line.

5. Wheel in accordance with one of the above claims, **characterized in that** the open cross section of the spokes points in the direction of the central axis of the vehicle or to the side facing away from the vehicle.

6. Wheel in accordance with one of the above claims, **characterized in that** the lateral, axially directed contact surfaces of the spoke segments and/or the hub centering are designed as bonding surfaces.

7. Wheel in accordance with one of the above claims, **characterized in that** the direction of the second molded part (3) is carried out via spacing segments (7), which are positioned by a flat load application element (8), which is received by the first molded part (2).

8. Wheel in accordance with one of the above claims, **characterized in that** the wheel spider is composed of a first molded part (2) made of fiber composite and a metallic second molded part (3), which ["dass als" in original is a typo for "das als" - Tr.Ed.] acts as a load application element, wherein the second molded part (3) is connected with the first molded part (2) via the axially directed areas (4) of the spoke segments and the hub centering (6) such that they are secured against rotation.

9. Wheel in accordance with claim 8, **characterized in that** the metallic load application element (9) forms the wheel hub.

## Revendications

1. Roue constituée d'une jante comportant un lit de jante (1) et d'un croisillon de roue en deux parties, le croisillon de roue étant constitué de deux pièces moulées, une première forme moulée (2) formant les rayons avec une section transversale ouverte et la seconde pièce moulée (3) étant jointe à la première pièce moulée (2), **caractérisée en ce que** les rayons de la première pièce moulée (2) en direction radiale s'obstruent partiellement le long de la longueur de profil.

2. Roue selon la revendication 1, **caractérisée en ce que** les rayons de la première forme moulée (2) forment une liaison de forme finale en contre-dépouille avec le lit de jante (1).

3. Roue selon la revendication 1 ou 2, **caractérisée en ce que** les deux formes moulées (2, 3) du croisillon de roue sont reliées l'une à l'autre en forme finale par les zones (4) dirigées axialement du profil de rayon et par le centrage médian.

4. Roue selon l'une des revendications précédentes, **caractérisée en ce que** les deux formes moulées (2, 3) du croisillon de roue sont reliées de manière composite au niveau de surfaces en contact ou le long d'au moins une ligne de liaison commune.

5. Roue selon l'une des revendications précédentes, **caractérisée en ce que** la section transversale ouverte des rayons pointe en direction de l'essieu médian du véhicule ou du côté opposé au véhicule.

6. Roue selon l'une quelconque des revendications précédentes, **caractérisée en ce que** les surfaces de contact latérales dirigées axialement des segments de rayon et/ou le centrage médian sont réalisés en tant que surfaces adhésives.

7. Roue selon l'une des revendications précédentes, **caractérisée en ce que** l'orientation de la seconde pièce moulée (3) s'effectue via des segments écarteurs (7) qui sont positionnés à travers un élément d'introduction de charge (8) plat, qui est intégré dans la première pièce moulée (2).

8. Roue selon l'une des revendications précédentes, **caractérisée en ce que** le croisillon de roue se compose d'une première pièce moulée (2) en matière composite de fibres et d'une seconde pièce moulée (3) métallique, qui fait office d'élément d'introduction de charge, la seconde pièce moulée (3) étant reliée sans possibilité de rotation à la première pièce moulée (2) via les zones (4) dirigées axialement des segments de rayon et du centrage médian (6).

9. Roue selon la revendication 8, **caractérisée en ce que** l'élément d'introduction de charge (9) métallique forme le moyeu.
